# EUROPEAN PATENT APPLICATION

(11) **EP 2 644 780 A2**
(43) Date of publication of application: **02.10.2013**
(21) Application number: 13160330.0
(22) Date of filing: 21.03.2013
(51) Int. Cl.: E02F 3/36, E02F 9/22, E02F 9/26

(54) **Method for controlling and governing a working machine with a tool and such a machine**

(30) Priority: 29.03.2012 SE 1250312
(71) Applicant: Oilquick AB, 824 12 Hudiksvall (SE)
(72) Inventor: Palmcrantz, Lennart, 820 76 Jättendal (SE)
(74) Representative: Karlsson, Leif Karl Gunnar

(57) **Abstract**

The invention concerns a method in a working machine provided with an implement attachment for the connection of different types of implements. It has a first system (200) for the control and steering of implement connected to the implement attachment. The system (200) has a first CAN bus (201) connected to a plurality of first units (202-204) for the control and steering. The working machine also comprises a second system (300) having a second CAN bus (301) connected to a plurality of second units (302-304) for the control and steering of another set of functions of the working machine.

According to the invention, a communication bridge (100) is arranged to transfer information from the first CAN bus (201) to the second CAN bus (301) and vice versa. The communication bridge (100) comprises a process means (108) for selecting information that should be transferred. The process means has a first (101) and a second (102) process module. The first process module (101) steers and monitors the communication bridge (100). The second process module (102) is for the communication between units (202-205) connected to the first CAN bus (201) and units (302-304) connected to the second CAN bus (301).

The invention also concerns such a working machine.

## Description

### Field of the Invention

In a first aspect, the present invention concerns a method for the control and steering of a working machine that is provided with an implement attachment for the connection of different types of implements, in which a first system controls and steers implement connected to the implement attachment and implement change, a plurality of first units of said first system for exercising said control and steering being connected to a first CAN bus, and in which a second system controls and steers other functions of the working machine, a plurality of second units of said second system control and steering these other functions and being connected to a second CAN bus.

In a second aspect, the invention concerns a working machine that is provided with an implement attachment for the connection of different types of implements and having a first system for the control and steering of implement connected to the implement attachment and the control and steering of implement change, which first system comprises a first CAN bus connected to a plurality of first units for exercising said control and steering, which working machine also comprises a second system having a second CAN bus connected to a plurality of second units for the control and steering of another set of functions of the working machine.

### Background of the Invention

In contractor's machinery, i.e., working machines provided with implements wherein the machine essentially is used for excavation, cultivation, digging, material handling, loading, unloading and similar work tasks, it is important to have a reliable and precise steering of the implement that generally is attached to an implement attachment on the working arm of the machine, and that is manoeuvred via hydraulics, pneumatics, and/or electricity from the driver's cab of the machine. For different types of work, different types of implements are required and different sizes of the same. Therefore, it is frequently a matter of concern to change implements. Systems have been developed to be able to manoeuvre an implement change from the driver's cab. In that connection, it is important to ensure that the new implement will be correctly and reliably attached to the implement attachment. Therefore, it is important to ensure that also the implement change process is steered and controlled in a reliable way.

For steering and controlling the implement during operation as well as upon implement change, it is previously known to handle the requisite information and control signals in a CAN bus arranged particularly for these purposes. In that connection, the CAN bus and the appurtenant steering and control system may be developed by the one who provides implements and systems for implement attachments, and is entirely separated from possibly other CAN buses of the working machine.

Today, also the proper working machine is usually provided with one or more other CAN buses for the handling of other functions of the working machine such as, e.g., its manoeuvring or its relation to the nearby topography.

In a working machine having several CAN buses, wherein one of which is related to the implement control, there is a need of a certain co-ordination between the same for the interaction between units connected to the respective CAN bus. Naturally, the co-ordination may be provided by integrating the CAN buses into a single common CAN bus for the steering and control of all functions of the working machine. However, a large disadvantage of this is the large amount of information and control signals that then will be transferred via the CAN bus and create congestion in the same. A significant part of the traffic only concerns units related to one of the CAN buses and is entirely irrelevant to the other one. Normally, it is only a fraction of the information and control signals that concerns interaction of units in the two CAN buses. The rest of the information is redundant and only contributes to the overload. Thereby, the system risks becoming incapable of functioning because of said overload.

In addition, it is most often so that the CAN bus system or systems that are related to the working machine originate from another supplier than the CAN bus system for the implement control. In that connection, the different systems are developed in different places and independently of each other, which may entail dissimilarities of the system structure principles and limited compatibility. This may create security problems and contributes to a full integration of the systems not being desired or possible.

An integration of the CAN bus system of different suppliers into a common one is in reality nearly impossible to accomplish, since different customers prefer different machine suppliers and equipment suppliers. For this reason, the need arises of a common "communication plaza" (communication interface) where the different CAN bus systems can exchange information without in other respects needing to co-ordinate themselves or "disclose" product specific secrets. This also entails the advantage that the respective partner system does not need to load the CAN bus with information unusable for the counterpart and that the system thereby risks becoming incapable of functioning because of said overload.

In the present application, with CAN bus (CAN= Controller Area Network), reference is made to the standard that has been developed as bus standard for vehicles and that enables communication between control units and devices to communicate with each other. However, the concept CAN bus in the present application is not limited to the protocol defined standard but also concerns similar systems that do not directly fall within the same as well as also systems having similar functionality irrespective of whether they are denominated CAN bus or not.

In applications of CAN bus systems for vehicles, it is often expedient to use separate CAN buses for different types of functions of the vehicle. In doing so, it may be suitable to interconnect the different CAN buses with a communication bridge that allows selective communication between the same. Such a technique is disclosed, for instance, in J. Eltze: "Double-CAN Controller as Bridge for Different CAN Networks" Proceedings of the 4th iCC, in H. Ekiz: "Design and implementation of a CAN/CAN bridge" Parallel Architectures, Algorithms and Networks, 1996. Second International Symposium pp 507-513, 12-14 June 1996, and in H Ekiz: "Performance analysis of a CAN/CAN bridge" Network Protocols 1996. Proceedings 1996 International Conference pp 181-188, 29 Oct. - 1 Nov. 1996, as well as furthermore in US 6 292 862 and CN101026527.

The known technique is essentially related to systems within the proper vehicle where it is suitable to divide the control and steering functions between several CAN buses. In that connection, the systems are developed in harmony with each other and fully compatible. The known technique does not solve the problem that arises as for the handling of an external CAN bus-controlled functionality such as manoeuvring and shifting of implement in a working machine

### Description of the Invention

The object of the present invention is to solve the problem described above and thus to allow communication between a CAN bus for the control and steering of an implement and shifting of such a one and a CAN bus belonging to the working machine in such a way that overload of information in the system is avoided and so that communication is allowed in a reliable way even if the CAN buses relate to systems from different suppliers.

From the first aspect of the invention, this object is attained by a method of the kind indicated by way of introduction comprising the special measures that are defined in the characterizing clause of claim 1. Thus, the invented method comprises that a communication bridge is connected between the first and the second CAN bus, that information is transferred via the communication bridge between the first and the second CAN bus, and that the communication bridge has a process means that selects which information that should be transferred.

According to a preferred embodiment of the invented method, the process means comprises a first and a second process module, which first process module steers and monitors the communication bridge and which second process module is arranged for the communication between units connected to the first CAN bus and units connected to the second CAN bus.

According to a further preferred embodiment of the invented method, at least one unit belonging to the second system is connected to the first CAN bus.

According to further preferred embodiments, the method is applied to a working machine provided with implements and formed according to the invention, particularly according to any one of the preferred embodiments of the same.

The invented method and the preferred embodiments of the same have advantages of the corresponding type as are indicated below for the invented working machine and the preferred embodiments of the same.

From the second aspect of the invention, the object set forth is attained by a working machine according to the preamble of claim 6 comprising the special features defined in the characterizing clause of the claim. Thus, the working machine has the feature that it comprises a communication bridge connected to the first and the second CAN bus, which communication bridge is arranged to transfer information from the first CAN bus to the second CAN bus and vice versa, and which communication bridge comprises a process means for selecting information that should be transferred.

By the communication bridge, it becomes possible for units of the CAN bus of the implement control system to communicate and interact with the CAN bus of the working machine, where desirable. Thanks to the information-selecting process means, it can be accomplished that only relevant steering and control signals go from units of one system to units of the other one. Other signals are filtered away by the process means in the communication bridge. The amount of information that needs to pass from one of the CAN buses to the other one is a relatively small part.

In addition, it is not uncommon that systems for implement steering and implement change are something that are developed by another party than the manufacturer of the working machine and therefore bringing about controlled information exchange is of special interest in such a context and contributes to increased security.

The invented method and the working machine may naturally also be applied in the co-operation between the first system and a working machine that in addition has a number of machine-related systems. Upon communication between only two CAN buses, the communication bridge has only two connection means. It should be appreciated that the communication bridge may be formed with more connection means in case communication exchange should be effected between the CAN bus of the implement system and more than one CAN bus of the working machine. This implies of course that the process means is more sophisticated as regards steering and selection of information. Alternatively, the CAN bus of the implement system may be separately connected via a communication bridge by two connection means to each one of the machine-related systems with which information transfer is needed.

According to a preferred embodiment of the working machine, the process means comprises a first and a second process module, which first process module is arranged for the steering and monitoring of the communication bridge, and which second process module is arranged for the communication between units connected to the first CAN bus and units connected to the second CAN bus

By the functional division of the logical tasks of the communication bridge, a clear and safe handling of the information transfer is achieved.

According to a further preferred embodiment, the second system comprises at least one unit that is connected to the first CAN bus.

In many cases, it may be expedient to connect one or more units that actually belong to the system of the second CAN bus to the CAN bus of the implement steering, which is allowed by the invention.

According to a further preferred embodiment, the process means also comprises a third process module arranged for the communication between units connected to the second CAN bus and the unit or units that belong to the second system, but that are connected to the first CAN bus.

The communication between units connected to the second CAN bus and such foreign units connected to the first CAN bus should have a different logic control. By equipping the communication bridge with logic function also for this purpose, accordingly it becomes useful for more sophisticated applications, and by allocating a separate process module for this, an optimum functionality of the communication bridge is guaranteed also in these cases. There may also be situations when both CAN buses have foreign units connected, i.e., units belonging to the system of the opposite CAN bus. It should be appreciated that the communication bridge may be formed to handle also this. Either by arranging the third process module so that it works in both directions or by arranging a fourth process module to handle communication to a foreign unit in the opposite direction.

According to preferred embodiments, the process means comprises a microprocessor that comprises the included process modules alternatively a separate microprocessor for each process module.

According to a further preferred embodiment, the vehicle comprises a display that presents information related to the first as well as the second CAN bus.

Although each one of the CAN buses has its separate tasks, there is nothing that prevents information presentation related to these from being presented on one and the same display. An advantage of this is that the driver of a vehicle gets a more integrated and clear control of the total operational process. The display may be arranged to selectably show information from the CAN bus of the implement steering or from the CAN bus of the working machine or from both simultaneously. In the case of more than two interconnected CAN buses, the display may be arranged to show information from all these. A possible manoeuvring panel adjacent to the display may also be arranged so that it handles both CAN buses entirely or partly.

The above-mentioned advantageous embodiments of the invention are defined in the dependent claims. It should be appreciated that further preferred embodiments may consist of any possible combination of the above-mentioned preferred embodiments and of any possible combination of these having features mentioned in the subsequent description of embodiment examples.

The invention is explained in more detail by the subsequent detailed description of examples of the same and with reference to the accompanying figures.

### Brief Description of the Figures

Fig. 1 is a diagram illustrating a CAN bus system for the steering and control of an implement of a working machine.
Fig. 2 is a diagram showing two CAN systems connected to each other by a communication bridge according to the invention.
Figs. 3-6 illustrate different examples of message transfer through the communication bridge.
Fig. 7 shows a working machine provided with CAN bus systems interconnected with a communication bridge according to the invention.

### Description of Embodiment Examples

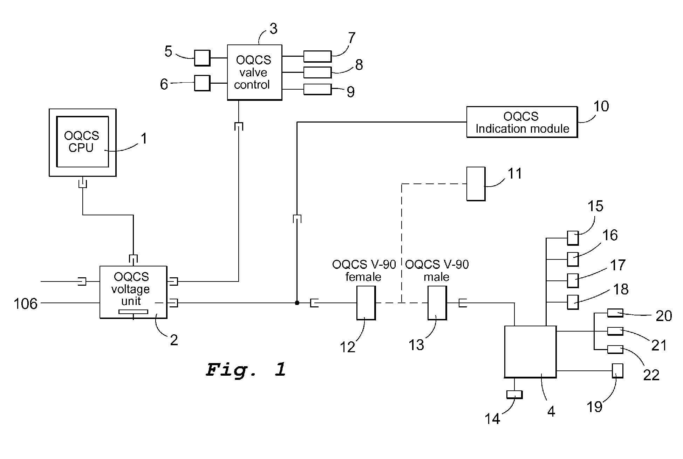

Fig. 1 illustrates a diagram of a CAN bus-based system for the steering and control of an implement of a working machine including the steering and control of implement change, quick fasteners, tiltrotators, and other implements belonging to the contracting industry. The system is applicable to implements and implement change of similar type as disclosed in WO 2011/019312. Here, the system is denominated OQCS and may relate to one of the CAN buses upon interconnection in accordance with the invention. The units communicate via the CAN bus with the industrial standard SAE J 1939 as a base in the protocol.

In the diagram, there is, among other things, a CPU unit 1, a power unit 2, a valve control unit 3, and a steering unit 4. The CPU unit 1, which is arranged in the driver's cab of the working machine, is provided with a touch screen, CAN bus, WLAN, and USB connections. The CPU unit 1 is connected to the power unit by a cable. In the power unit, there is a plurality of analog inputs and outputs, digital inputs and outputs, etc. These are used to connect the requisite sensors and steerings that are needed for the control of the implement system and the quick fastener. When the system shown is to co-operate with another CAN bus, there is a line for the interconnection with a connection means 106 of a communication bridge according to the invention and which is described in more detail further down.

Cables connect the power unit 2 with other units of the system. All units contain the necessary inputs and outputs to manage their respective dedicated tasks.

A cable connects the power unit 2 with the indication module 10 of the attachment and the female coupling 12 of the implement attachment.

Additional units that are mounted on the implements, an identification module 11 or the steering unit 4, are connected via the male coupling 13 to the current implement.

By means of the OQCS system described, pilot valves for the pressurizing of implement locks, decompression valves, joysticks for the steering of implements connected to the extra hydraulics of the working machine, valves for special purposes, special implements, etc., can be connected and steered.

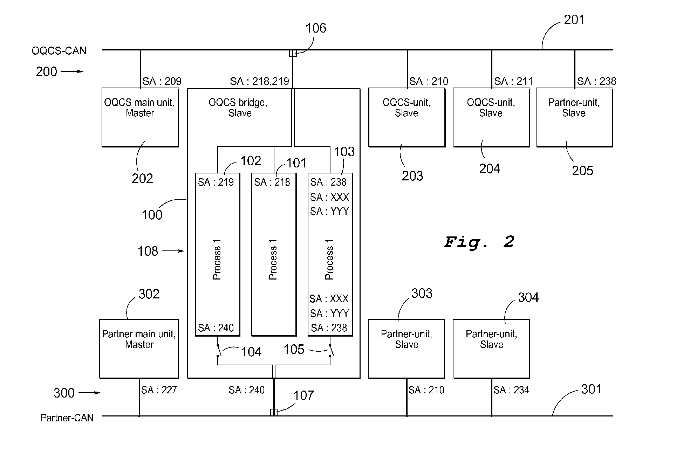

The OQCS system described above is just an example of a CAN bus-based system for which the present invention is intended. In connection with Fig. 2, it is described how a first CAN bus, such as an OQCS CAN bus, is arranged to, in accordance with the invention, co-operate with another CAN bus, which in the example described is denominated partner CAN bus. The systems are denominated OQSC system and partner system, respectively.

The diagram in Fig. 2 shows an OQCS system 200, i.e., a first system that is connected to a partner system, i.e., a second system via a communication bridge 100. The OQCS system 200 has an OQCS CAN bus 201 to which a plurality of units belonging to the OQCS system are connected and one or some units belonging to the partner system. The units comprise an OQCS-main unit 202, two OQCS-slave units 203, 204, and a partner-slave unit 205, and in addition further OQCS-slave units, not shown, and possibly another partner-slave unit. A plurality of partner-slave units in the CAN bus 201 may come into question. The OQCS main unit 202 steers all slave units 203, 204 of the OQCS system.

The partner system 300 has a partner CAN bus 301, to which a plurality of units belonging to the partner system are connected. The units comprise a partner-main unit 302 and two partner-slave units 303, 304, and in addition further partner-slave units, not shown. The partner-main unit 302 steers all slave units 303, 304, 205 of the partner system irrespective of to which bus they are connected.

The communication bridge 100, which connects the two buses 201, 301 to each other, has a first connection means 106 for the connection to the OQCS CAN bus 201 and a second connection means 107 for the connection to the partner CAN bus 301. The communication bridge 100 is arranged to bring about transfer of steering and control signals in both directions between the CAN buses, and this in a selective way. The communication bridge allows, among other things, the OQCS main unit 202 and the partner-main unit 302 to communicate with each other via a defined interface. The communication bridge furthermore allows the partner-main unit 302 to communicate with the partner-slave unit 205 on the OQCS CAN bus in spite of them being mounted on physically different CAN buses.

All units of the systems have been allocated a numbered SA (Source Address) in accordance with the standard J 1939. SA is unique for each unit in the respective CAN bus. The system supports the NAME standard for the identification of units. The SA number of the respective unit is given in the figure.

The communication bridge 100 is provided with a process means 108 arranged to steer and filter the information transfer. In the example shown, the process means is divided into three process modules 101, 102, 103, wherein each one of which has its special function. The three process modules may be integrated into a common microprocessor. Alternatively, a microprocessor may be arranged for each process module separately.

The first process unit 101 has the purpose of steering and monitoring the communication bridge 100. The process unit 101 occurs as an individual logic unit having a defined communication protocol, which responds to one of the obtained SA-addresses on the OQCS CAN bus and has been allocated the SA number 218 in the OQCS system. The process unit 101 communicates only with the OQCS system. The process unit 101 has, among other things, the following properties and functions:
- Information about which partner CAN bus that is connected.
- Communication on/off with the partner CAN bus by means of the logical breakers 104 and 105.
- Tables of first choice of SA and alternative addresses.
- Tables with NAME tags for the identification of partner units.
- Tables with which partner units that exist in the OQCS CAN bus.
- Settings of parameters of the partner system.

All steering of the communication bridge takes place via the allocated SA 218 and it is only reached from the OQCS bus. The process module 101 also steers the second 102 and the third 103 process module.

The second process module 102 handles the peer-to-peer communication between units on the OQCS CAN bus 101 and units on the partner CAN bus 201, and it is this that allows exchange of information between the two CAN systems. The process module 102 has the SA number 219 in the OQCS system and the SA number 240 in the partner system. The process module 102 listens to OQCS CAN and partner CAN and passes through all messages that have the correct destination, SA, on the respective side of the communication bridge. Messages that do not have the correct SA on either side of the communication bridge are ignored. The requirement of said communication is that the hosts of the respective system have established a common protocol for the exchange of information and NAME appearance in the partner system upon claim of address (SA). A consequence of this is that all traffic to the OQCS bus only goes to a unit allowed by the OQCS system and this is a precautionary measure.

The third process module 103 handles the peer-to-peer communication between partner units 205 on the OQCS bus 201 and units on the partner CAN bus. It is this process module that the partner system uses to get information from its units 205 on the OQCS bus as well as is given possibility of sending information to these. The process module 103 listens to OQCS CAN and partner CAN. It passes all messages that have the correct destination, SA, onto the OQCS bus independently of from where the message originates on the partner CAN bus. It passes off all messages that originates from a partner unit without affecting the contents. The process module 103 is arranged to be able to handle more than one partner unit 205 on the OQCS CAN bus. The process module 103 occurs in relation to both systems with the SAs that are allocated partner units in the OQCS CAN bus, i.e., 238 for the unit 205 shown and XXX, YYY for possibly additional such units.

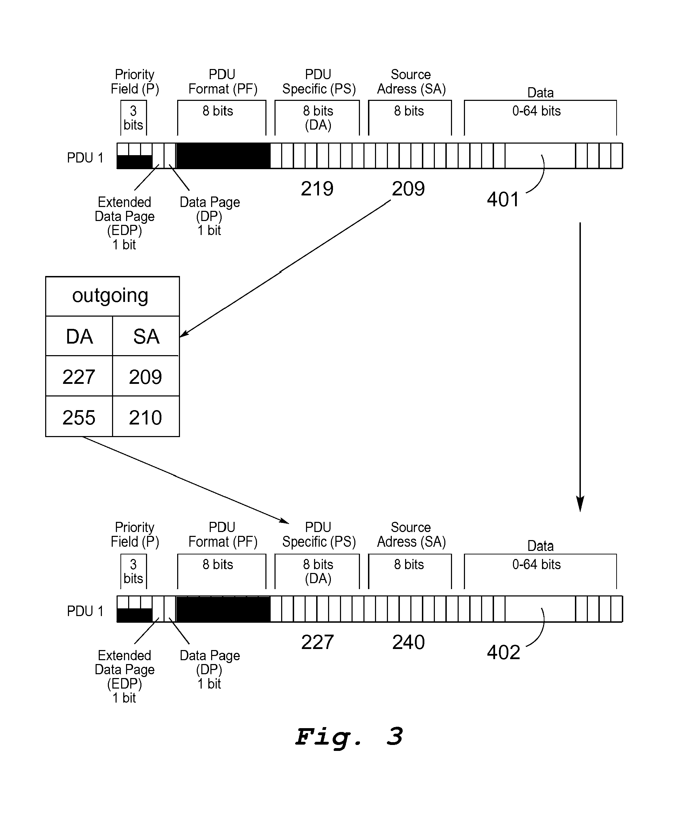

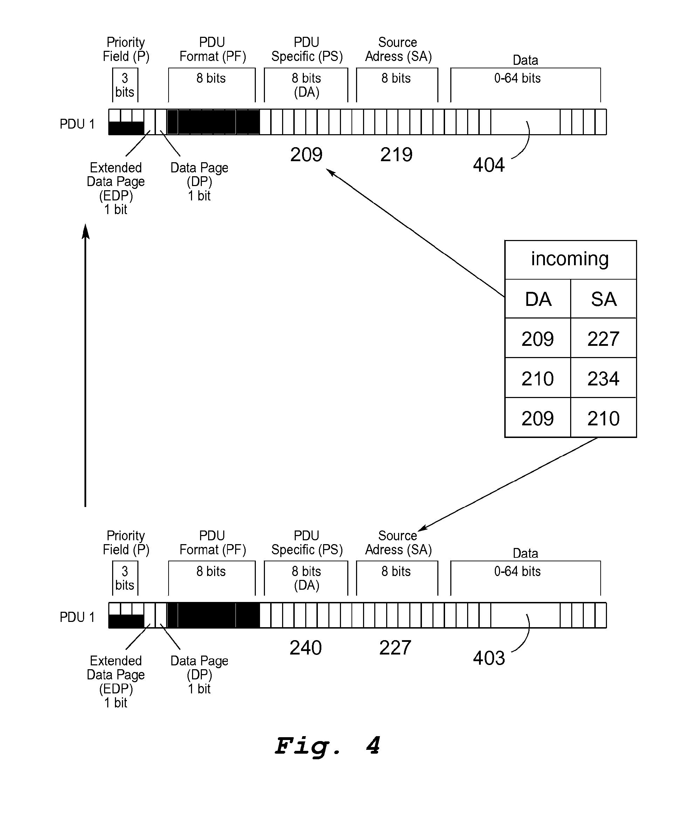

Fig. 3 and Fig.4 illustrate messages transferred via the second process module 102. By a mutually established protocol, the partner CAN bus has communicated which address (SA) the partner-main unit has and this is put into the bridge register of receivers of outgoing messages. This is handled by the first process module 101. In incoming messages, SA is checked against a table of approved senders in the partner CAN bus. These approved senders are then matched against approved receivers in the OQCS bus.

In Fig. 3, an outgoing message from the OQCS main unit 202 to the partner-main unit 302 is illustrated. The information string 401, which accordingly is based on J 1939, in the message from the OQCS main unit 202 has the SA number 209 of the OQCS main unit as sender and the SA number 219 of the second process module 102 directed toward the OQCS CAN bus as addressee. In the process module 102, the message is reinterpreted so that it has the SA number 240 of the process module 102 directed toward the partner CAN bus as sender and the SA number 227 of the partner-main unit 302 as receiver in the information string 402 in the message outgoing from the process unit 102..

The corresponding course of events when a message is sent from the partner-main unit 302 to the OQCS main unit 202 is illustrated in Fig. 4, where, in the same way, the process unit 102 reinterprets the SA numbers in the incoming information string 403 into relevant SA numbers in the outgoing information string 404.

Upon, e.g., hooking on of an implement in the OQCS system, the OQCS system may inform the partner system about implement change having been effected and give relevant information about the implement, for instance its geometry, pressure, and flow requirement.

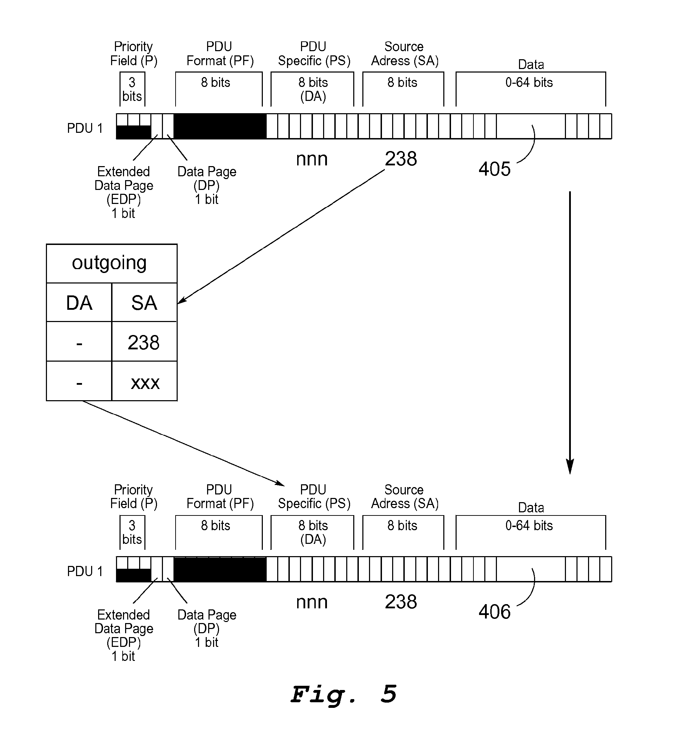

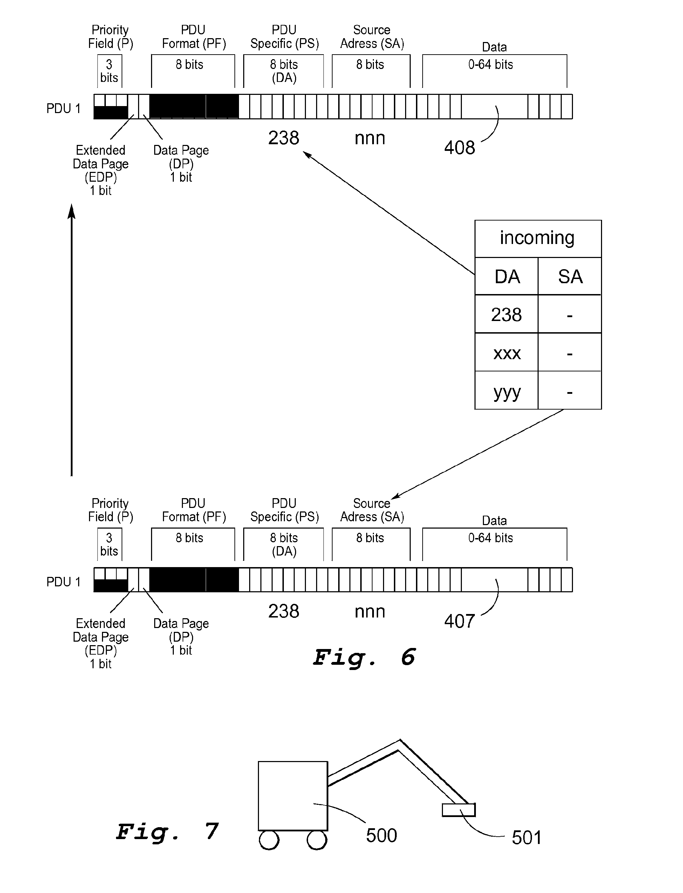

Fig. 5 and Fig. 6 illustrate messages transferred via the third process module 103. In Fig. 5, there are illustrated messages outgoing from a partner unit 205 in the OQCS bus 201, wherein the SA 238 of the sender is given in the information string 405, and no destination is given. The message passes the process unit 103 without reinterpretation and the information string 406 in the partner CAN bus 301 is unaltered. The corresponding takes place upon message from partner unit in the partner CAN bus 301 to partner unit 205 in the OQCS CAN bus 201 and is illustrated in Fig.6. Thus, also here, incoming 407 and outgoing 408 information strings are identical. In this way, the communication bridge 100 becomes transparent in all traffic through the process module 103 and all traffic in the OQCS bus is limited to the traffic in this that concerns partner units 205. The OQCS system does not have to know what should be transported through the OQCS bus 201.

Examples of measures by the system described above:
- The partner-main unit 302 sends a message with SA 238 to the communication bridge 100. Its process module 103 lets in the message in the OQCS CAN bus 201 to the partner unit 205 into the same independently of the ID(PGN) of the message.
- The partner unit 205 in the OQCS CAN bus sends a message to some unit on the partner CAN bus 301. The process module 103 of the communication bridge 100 lets out the message on the partner CAN bus 301 independently of ID (PGN) and receiver address.
- The partner unit 205 sends a broadcast message on the OQCS CAN bus. The process module of the communication bridge 100 lets out the message on the partner CAN bus 301.
- The OQCS main unit 202 sends a message addressed to the first process module 101 of the communication bridge 100 with SA 218. This is a command to the communication bridge 100 to do something according to its command protocol and possibly respond to the OQCS main unit 202. This takes place according to the OQCS protocol.
- The OQCS main unit 202 sends a message addressed to the second process module of the communication bridge 100 with SA 219. This message is interpreted and sent further out on the partner CAN bus 301 as a message from the process unit 102 to some unit on the partner CAN bus 301. Before that, a message is sent to the first process module 101 of the communication bridge 100 with SA 218 that indicates destination of the message to the second process unit 102, e.g., the partner-main unit 302 with SA 227. The address SA 240 of the second process unit 102 in the partner CAN bus 301 is known via the address claim that has been made in the partner CAN system.
- A message from the OQCS main unit 202 to the communication bridge 100 is reinterpreted in the same, i.e., changes source and destination to match allocated addresses of the units on the partner CAN bus 301.

The partner system may, for instance, be a machine control system, implement steering, or contractor's machinery, or something similar having the standard J 1939 as a base. However, the speed does not need to be the same.

The given address numbers of SA and DA are naturally only examples and it should be appreciated that they may be dynamic.

By means of the connected system described above, the following basic commands may, among others, be executed:
- Start/stop of communication with the partner CAN bus.
- Adapt setting to the speed of the partner CAN bus.
- Claim address in partner CAN with preferred address according to table or dynamically and forward these messages to OQCS CAN.
- Communicate obtained address to the OQCS main unit via command.
- Set destination address of messages that come via partner address.
- Set filter to listen and intercept messages on the partner CAN bus on PGN level, max two filters.
- Set filter to listen and intercept messages on the partner CAN bus on destination level.
- The OQCS main unit is the only unit that can send and receive OQCS messages to and from the partner CAN bus.
- An address of the communication with the partner system that is transparent with regard to data, but shifts PGN, source, and destination in the communication bridge.
- Partner addresses are configured when the communication bridge is started in the system for the first time.
- Handle address claim procedure transparently for partner units in the OQCS CAN bus toward the partner CAN bus if this is started. Otherwise, it is buffered in the communication bridge.
- Be transparent to messages to and from units of the partner system if the partner CAN bus is started.
- Be transparent to broadcast messages from partner units.
- Data storage.

In Fig. 7, there is shown a simplified picture of a working machine 500 provided with an implement attachment 501 for the connection of different types of implements. The working machine is provided with a system of the above described kind.

## Claims

1. Method for the information transfer, control and steering of a working machine (500) that is provided with an implement attachment (501) for the connection of different types of implements, in which a first system (200) transfers information, controls and steers implement connected to the implement attachment and implement change for checking that the new implement becomes correctly and reliably attached to the implement attachment (501), a plurality of first units (202-204) of said first system (200) for exercising said information transfer, control and steering being connected to a first CAN bus (201) particularly formed for said first system (200), and in which a second system (300) controls and steers other functions of the working machine (500), a plurality of second units (302-304) of said second system controlling and steering these other functions and being connected to a second CAN bus (301) particularly formed for said second system (300), **characterized in that** a communication bridge (100) is arranged to allow adaptation of the first system (200) and the CAN bus (201) thereof to the second system (300) and the CAN bus (301) thereof, which communication bridge (100) is connected to the first (201) and the second (301) CAN bus, and that information is transferred via the communication bridge (100) from the first CAN bus (201) to the second CAN bus (301) and/or vice versa, and that the communication bridge (100) has a process means (108) that selects which information that is transferred

2. Method according to claim 2, **characterized in that** the process means (108) comprises a first (101) and a second (102) process module, which first process module (101) steers and monitors the communication bridge (100) and which second process module (102) is arranged for the communication between units (202-205) connected to the first CAN bus (201) and units (302-304) connected to the second CAN bus (301).

3. Method according to claim 1 or 2, **characterized in that** at least one unit (205) belonging to the second system (300) is connected to the first CAN bus (201).

4. Method according to claim 3, **characterized in that** the process means (108) also comprises a third process module (103) arranged for the communication between units (302-304) connected to the second CAN bus (301) and said at least one unit (205) connected to the first CAN bus.

5. Method according to any one of claims 1-4, **characterized in that** it is exercised by a working machine (500) according to any one of claims 6-12.

6. Working machine (500) provided with an implement attachment (501) for the connection of different types of implements and having a first system (200) for the information transfer, control and steering of implement connected to the implement attachment (501) and the information transfer, control and steering of implement change for checking that the new implement attachment becomes correctly and reliably attached to the implement attachment (501), which first system (200) comprises a first CAN bus (201) particularly formed for said first system (200) and connected to a plurality of first units (202-204) for exercising said information transfer, control and steering, which working machine also comprises a second system (300) having a second CAN bus (301) particularly formed for said second system (300) and connected to a plurality of second units (302-304) for the information transfer, control and steering of another set of functions of the working machine (500), **characterized in that** the working machine (500) comprises a communication bridge (100) arranged to allow adaptation of the first system (200) and the CAN bus (201) thereof to the second system (300) and the CAN bus thereof and that is connected to the first (201) and the second (301) CAN bus, which communication bridge (100) is arranged to transfer information from the first CAN bus (201) to the second CAN bus (301) and vice versa, and which communication bridge (100) comprises a process means (108) for selecting information that should be transferred.

7. Working machine according to claim 6, **characterized in that** the process means comprises a first (101) and a second (102) process module, which first process module (101) is arranged for the steering and monitoring of the communication bridge (100), and which second process module (102) is arranged for the communication between units (202-205) connected to the first CAN bus (201) and units (302-304) connected to the second CAN bus (301).

8. Working machine according to claim 6 or 7, **characterized in that** the second system (300) comprises at least one unit (205) that is connected to the first CAN bus (201).

9. Working machine according to claim 8, **characterized in that** the process means (108) also comprises a third process module (103) arranged for the communication between units (302-304) connected to the second CAN bus (301) and said at least one unit (205) that belongs to the second system (300), but that is connected to the first CAN bus (201).

10. Working machine according to any one of claims 6-9, **characterized in that** the process means (108) comprises a microprocessor that comprises said process modules (101-103).

11. Working machine according to any one of claims 6-9, **characterized in that** the process means (108) comprises a separate microprocessor for each one of said process modules (101-103).

12. Working machine according to any one of claims 6-11, **characterized in that** the working machine (500) comprises a display that presents information related to the first (201) as well as the second (301) CAN bus.
